# EUROPEAN PATENT APPLICATION

(11) **EP 2 028 067 A1**
(43) Date of publication of application: **25.02.2009**
(21) Application number: 07016661.6
(22) Date of filing: 24.08.2007
(51) Int. Cl.: B60R 25/10, B60Q 1/26, H01Q 1/06, G08B 13/14

(54) **Vehicle anti-theft SOS-calling device**

(71) Applicant: Yu, Pin-Ying, Tainan City (TW)
(72) Inventor: Yu, Pin-Ying, Tainan City (TW)
(74) Representative: Volpert, Marcus

(57) **Abstract**

A vehicle anti-theft SOS-calling device includes at least one SOS-calling device (1) having a control unit (10), anti-theft detecting unit (11), a rescue signal lamp board (12) and a remote controller (2) having a main controller (20), at least one switch (21), and an alarming unit (22). The control unit (10) has a wireless receiver (13) and a wireless transmitter (14); the main controller (20) has a wireless transmitter (23) and a wireless receiver (24). The rescue signal lamp board (12) has light emitters (120) in a shape of a word meaning rescue and fixed clearly visible on a vehicle body. The SOS-calling device (1) is turned on and off by the remote controller (2) to send signals to the control unit (10) to light up the rescue signal lamp board (12) and simultaneously the wireless transmitter (14) of the SOS-calling device (1) transmits signals to the wireless receiver (24) of the remote controller (2), so that the data of the signals is shown on the alarming unit (22), indicating the vehicle being stolen.

## Description

### BACKGROUND OF THE INVENTION

### 1. Field of the Invention

This invention relates to a vehicle anti-theft SOS-calling device, particularly to one operable by a remote controller, composed of an anti-theft detecting unit for lighting up a rescue signal lamp board and send signals to a far located warning unit to inform a vehicle owner in case that a vehicle should be touched, hit, opened with its door, moved or lifted up and dragged off.

### 2. Description of the Prior Art

An anti-theft device for a vehicle is generally a lock such as a steering lock, a crutch lock, or an alarming device, but a steering lock can be pried open or broken by a thief with a tool, losing its function. As for an alarming device, its connecting lines can be cut off to let the alarming device lose its role, in addition to no awareness of the owner of the event.

### SUMMARY OF THE INVENTION

The objective of the invention is to offer a vehicle anti-theft SOS-calling device, operable by a remote controller, to turn on and off an anti-theft detecting unit for starting a rescue signal lamp board and at the same time actuating a warning to an owner of a vehicle, in case that the vehicle should be touched, moved or drawn off.

The main feature of the invention is to provide at least one SOS-calling device (1) and a remote controller (2). The at least one SOS-calling device (1) is composed of a control unit (10) powered by a vehicle power source and consisting of a wireless receiver (13) and a wireless transmitter (14); an anti-theft detecting unit (11) connected to the control unit (10); and a rescue signal lamp board (12) connected to the control unit (10) and fixed on a clearly visible location on a vehicle body and provided with a plurality of light emitters (120) arranged in a shape of a word meaning rescue. The remote controller (2) capable of transmitting signals to the at least one SOS calling device (1) and also receiving wireless signals from the at least one SOS calling device (1) is composed of a main controller (20), at least one switch (21) and an alarming unit (22), the main controller (20) getting power from an independent battery and consisting of a wireless transmitter (23) and a wireless receiver (24), the at least one switch (21) connected to the main controller (20) and turning on and off the main controller (20) for transmitting and receiving signals, the alarming unit (22) connected to the main controller (20) for showing data of wireless signals received.

### BRIEF DESCRIPTION OF DRAWINGS

This invention will be better understood by referring to the accompanying drawings, wherein:
Figure 1 is a block diagram of a vehicle anti-theft SOS-calling device, showing the operation of a SOS-calling device and a remote controller in the present invention;
Figure 2 is a perspective view of the vehicle anti-theft SOS-calling device, showing the remote controller and a rescue signal lamp board made of electro luminescent panels in the present invention;
Figure 3 is a perspective view of the vehicle anti-theft SOS-calling device, showing the remote controller and a rescue signal lamp board made of LED lamps in the present invention; and,
Figures 4 and 5 are side views of the vehicle anti-theft SOS-calling device, showing the rescue signal lamp boards fixed on different locations of a car and being used in the present invention.

### DETAILED DESCRIPTION OF THE PREFERRED EMBODIMENT

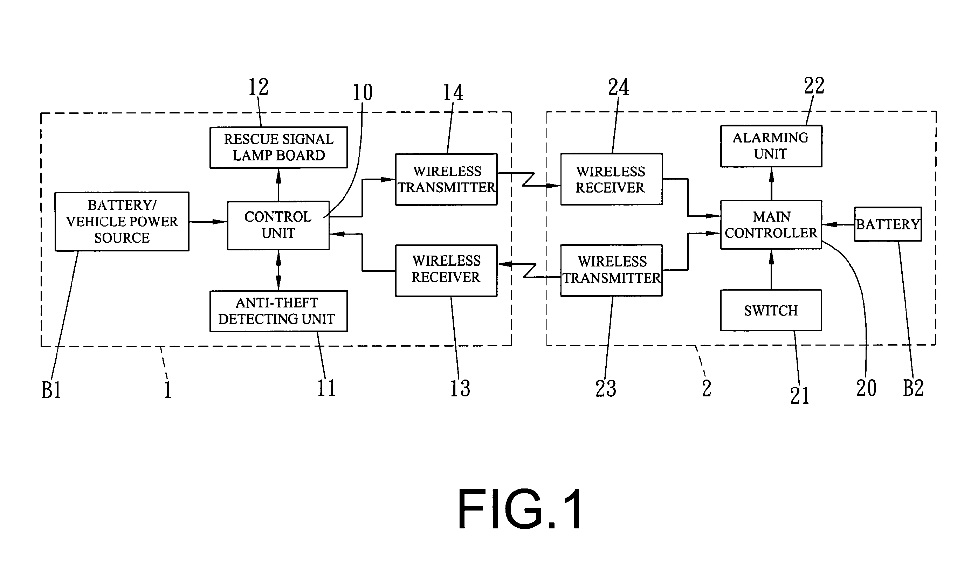

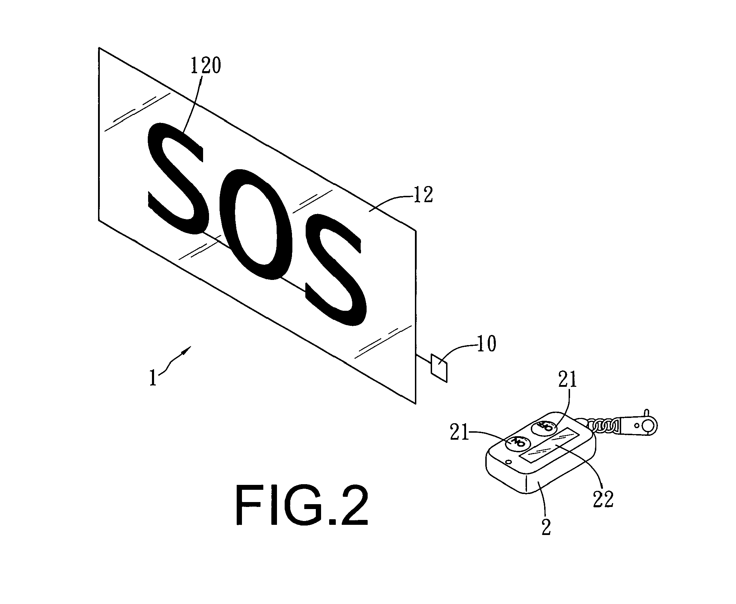

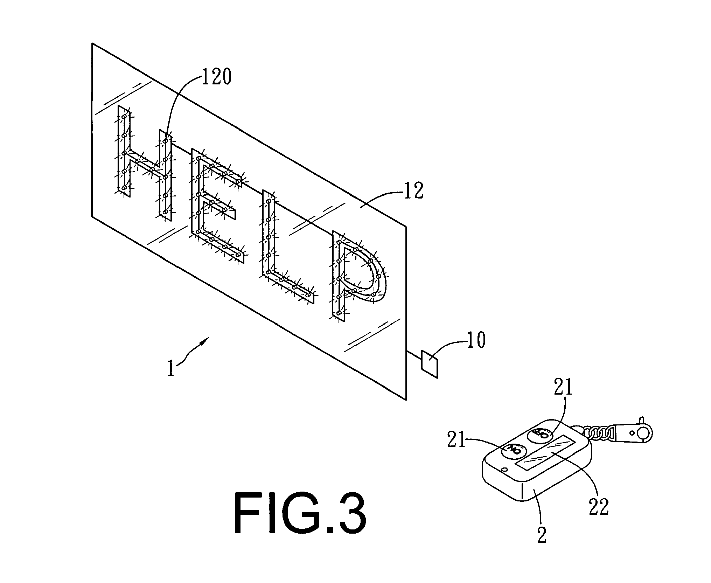

A proffered embodiment of a vehicle anti-theft SOS-calling device in the present invention, as shown in Figs. 1 - 5, includes at least one SOS-calling device 1, and a remote controller 2 as main components.

The at least one SOS-calling device 1 is composed of a control unit 10, an anti-theft detecting unit 11, a rescue signal lamp board 12, a wireless receiver 13 and a wireless transmitter 14. The control unit 10 is powered by an independent battery B1 or a power source of a vehicle, and the anti-theft detecting unit 11 is connected to the control unit 10. The rescue signal lamp board 12 is placed at a clearly visible location of a vehicle body and connected to the control unit 10, provided with a plurality of light emitters 120 made of electro luminescent panels or brilliant LED lamps arranged as the shape of SOS or HELP. The control unit 10 is formed with the wireless receiver 13 and the wireless transmitter 14.

The remote controller 2 is composed of a main controller 20, an independent battery B2, at least one switch 21, and an alarming unit 22. The main controller 20 consists of a wireless transmitter 23 and a wireless receiver 24. The at least one switch 21 is connected to the main controller 20 and turns on and off the main controller 20 for transmitting and receiving wireless signals The alarming unit 22 connected to the main controller 20 for showing wireless data received may be a warning lamp or an LCD face plate.

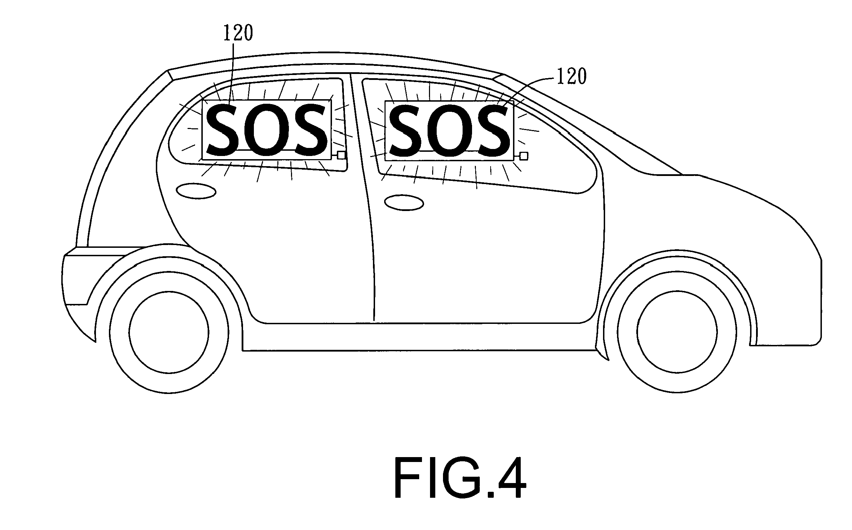

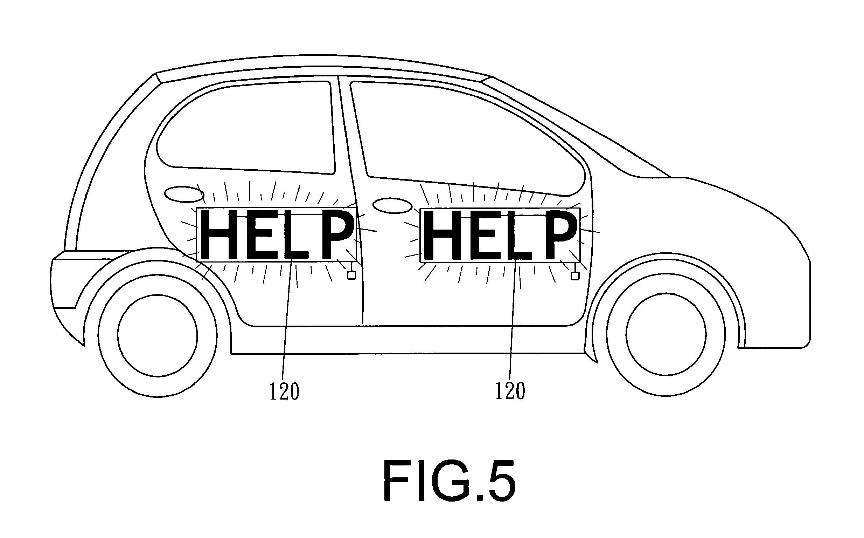

The rescue signal lamp board 12 of the SOS calling device 1 is fixed on a clearly visible location of a vesicle body, such as a glass, an outer surface of the body, as shown in Fig. 4 or 5. In using, referring to Fig. 1, when the owner of a vehicle goes away the vehicle, the person uses the remote controller 2 to turn on the at least one switch 21 so that the wireless transmitter 23 may transmit wireless signals to the wireless receiver 13 of the SOS calling device 1, and then the control unit 10 turns on the anti-theft detecting unit 11, which becomes on a waiting condition. In case that the anti-theft detecting unit 11 senses the vehicle gotten hit or touched by someone or something, opened with its door, moved or lifted up and dragged off, the anti-theft detecting unit 11 sends signals to the control unit 10, which then lights up the rescue signal lamp board 12. Then the light emitters 120 are lit up the rescue word of SOS or HELP, so people around the vehicle may be alarmed, and at the same time, the wireless transmitter 14 sends out signals to the wireless receiver 24 of the remote controller 2 and then the main controller 20 shows wireless data received to the alarming unit 22, which then informs the owner of the event. If the owner wants to drive the vehicle, he or she only has to change the at least one switch 21 to OFF, and then the SOS calling device 1 is to be cut off, disabling the anti-theft detecting device 11.

Moreover, an anti-theft lock may be additionally used with this invention for doubling anti-theft effect for a vehicle.

While the preferred embodiment of the invention has been described above, it will be recognized and understood that various modifications may be made therein and the appended claims are intended to cover all such modifications that may fall within the spirit and scope of the invention.

## Claims

1. A vehicle anti-theft SOS-calling device comprising:
at least one SOS calling device (1);
a remote controller (2); and,
**characterized by** said at least one SOS calling device (1) composed of a control unit (10) powered by a vehicle power source, an anti-theft detecting unit (11) connected to said control unit (10), and a rescue signal lamp board (12) connected to said control unit (10) and fixed on a clearly visible location on a vehicle body and provided with a plurality of light emitters (120) arranged in a shape of a word meaning rescue, said control unit (10) consisting of a wireless receiver (13) and a wireless transmitter (14) ; and,
said remote controller (2) capable of transmitting signals to said at least one SOS calling device (1) and also receiving wireless signals from said at least one SOS calling device (1), and composed of a main controller (20), at least one switch (21) and an alarming unit (22), said main controller (20) getting power from an independent battery and consisting of a wireless transmitter (23) and a wireless receiver (24), said at least one switch (21) connected to said main controller (20) and turning on and off said main controller (20) for transmitting and receiving signals, said alarming unit (22) connected to said main controller (20) for showing data of wireless signals received.

2. The vehicle anti-theft SOS-calling device as claimed in Claim 1, wherein said control unit (10) of said at least one SOS calling device (1) is powered by an independent battery (B1).

3. The vehicle anti-theft SOS-calling device as claimed in Claim 1, wherein said plurality of light emitters (120) of said rescue signal lamp board (12) arranged in à shape of a word meaning rescue are made of electro luminescent panels.

4. The vehicle anti-theft SOS-calling device as claimed in Claim 1, wherein said plurality of light emitters (120) of said rescue signal lamp board (12) arranged in a shape of a word meaning rescue are formed with LED lamps.

5. The vehicle anti-theft SOS-calling device as claimed in Claim 1, said alarming unit (22) of said remote controller (2) is a warning lamp.

6. The vehicle anti-theft SOS-calling device as claimed in Claim 1, wherein said alarming unit (22) of said remote controller (2) is an LCD face plate.
